(19) **Europäisches Patentamt / European Patent Office / Office européen des brevets**

(11) **EP 3 992 217 A1**

(12) # EUROPEAN PATENT APPLICATION
published in accordance with Art. 153(4) EPC

(43) Date of publication:
**04.05.2022 Bulletin 2022/18**

(21) Application number: **20830686.0**

(22) Date of filing: **23.06.2020**

(51) International Patent Classification (IPC):
**C08F 218/04** *(2006.01)*    **C08F 222/02** *(2006.01)*
**C08F 222/04** *(2006.01)*

(52) Cooperative Patent Classification (CPC):
**C08F 218/04; C08F 222/02; C08F 222/04**

(86) International application number:
**PCT/JP2020/024619**

(87) International publication number:
**WO 2020/262382 (30.12.2020 Gazette 2020/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2019 JP 2019122056**

(71) Applicant: **Kuraray Co., Ltd.
Kurashiki-shi, Okayama 710-0801 (JP)**

(72) Inventors:
• **BABA, Masahiro
Kurashiki-shi, Okayama 710-0801 (JP)**
• **SAEGUSA, Yusuke
Kurashiki-shi, Okayama 710-0801 (JP)**
• **KATO, Toshinori
Kurashiki-shi, Okayama 710-0801 (JP)**

(74) Representative: **Müller-Boré & Partner
Patentanwälte PartG mbB
Friedenheimer Brücke 21
80639 München (DE)**

(54) **WATER-ABSORBENT COPOLYMER**

(57)    The present invention relates to a water-absorbent copolymer comprising a vinyl alcohol constituent unit x and a constituent unit z other than the vinyl alcohol constituent unit x and a vinyl ester constituent unit y, wherein a ratio of a content of an average sequence of the constituent unit z to a content of the constituent unit z is 50.0 mol% or less.

EP 3 992 217 A1

**Description**

TECHNICAL FIELD

The present invention relates to a vinyl alcohol-based water-absorbent copolymer.

BACKGROUND ART

Recently, with chronic depletion of water resources, attempts have been made to effectively and appropriately utilize agricultural water and to maintain or increase the yield of agricultural products even with a smaller amount of irrigation water than before, with the use of so-called agricultural water retention materials (see, for example, Patent Documents 1 and 2). These agricultural water retention materials contain a superabsorbent polymer (SAP) as a main component, exhibit a water retention effect with an extremely small amount as compared to, for example, peat moss used for improving the water retainability of the entire soil, and therefore have an advantage of placing little burden when used by farmers.

Meanwhile, as water-absorbent resins, for example, neutralized products of starch-acrylonitrile graft polymers, saponified products of starch-acrylic acid graft polymers, saponified products of vinyl acetate-acrylic acid ester copolymers, crosslinked products of partially neutralized polyacrylic acids (Patent Documents 1 and 2), and the like are known.

The conventional water-absorbent resins as described above have a problem that a water-absorbent gel has low stability to sunlight or ultraviolet rays (Patent Document 3). That is, when a water-absorbent gel obtained by causing a water-absorbent resin to absorb water is exposed to sunlight or ultraviolet rays, the water-absorbent gel is often deteriorated and fluidized in a short time (e.g. within several hours), and cannot maintain a gel form. Therefore, it is difficult to use such a water-absorbent resin in applications in which light resistance is required (e.g. agricultural or horticultural water retention materials, aromatic gelling agents, deodorant gelling agents, artificial snow and the like).

As means for solving this problem, prior art documents disclose a water-absorbent gel in which a dispersion liquid obtained by dispersing water-insoluble iron oxide or titanium oxide fine powder in an aqueous dispersion medium is applied to a water-absorbent resin to absorb the aqueous dispersion medium (Patent Document 3), a water retention material containing carbon black serving as a light-shielding material and having a function of self-dispersion in water, and a water-absorbent resin (Patent Document 4), and a water retention material containing a water-soluble ultraviolet absorber and a water-absorbent resin (Patent Document 5).

PRIOR ART DOCUMENTS

PATENT DOCUMENTS

Patent Literature 1: WO 1998/005196 A
Patent Literature 2: JP-A-2013-544929
Patent Document 3: JP-A-2-135263
Patent Literature 4: WO 2009/072232 A
Patent Literature 5: JP-A-2009-185117

SUMMARY OF THE INVENTION

PROBLEMS TO BE SOLVED BY THE INVENTION

However, the studies by the present inventors have shown that the method for producing a water-absorbent gel as disclosed in Patent Document 3 has a problem that it is difficult to uniformly disperse iron oxide or titanium oxide fine powder, and it is necessary to increase the added amount of iron oxide or titanium oxide fine powder for obtaining sufficient light resistance. In addition, the water retention materials disclosed in Patent Documents 4 and 5 have a problem that since the carbon black or the ultraviolet absorber is water-dispersible or water-soluble, the carbon black or the ultraviolet absorber is eluted with the lapse of time, so that the light resistance of the water-absorbent resin is deteriorated.

An object to be achieved by the present invention is to solve the above-described problems and to provide a polymer having high light resistance.

SOLUTIONS TO THE PROBLEMS

For solving the above-described problem, the present inventors have rigorously conducted studies on a polymer, and resultantly come to consider that in a water-absorbent copolymer comprising a vinyl alcohol constituent unit x and a constituent unit z other than the vinyl alcohol constituent unit x and a vinyl ester constituent unit y, a sequence of the constituent units z may be a factor which determines light resistance (particularly ultraviolet resistance), leading to completion of the present invention.

Specifically, the present invention includes the following preferred embodiments.

[1] A water-absorbent copolymer comprising a vinyl alcohol constituent unit x and a constituent unit z other than the vinyl alcohol constituent unit x and a vinyl ester constituent unit y, wherein a ratio of a content of an average sequence of the constituent unit z to a content of the constituent unit z is 50.0 mol% or less.

[2] The water-absorbent copolymer according to [1], wherein the content of the constituent unit z is 50.0 mol% or less based on the total number of moles of all the constituent units forming the water-absorbent copolymer.

[3] The water-absorbent copolymer according to [1] or [2], wherein the constituent unit z has an ionic group or a derivative of an ionic group.

[4] The water-absorbent copolymer according to [3], wherein the constituent unit z has a derivative of an ionic group.

[5] The water-absorbent copolymer according to any one of [1] to [4], wherein the constituent unit z is derived from one or more types of monomers selected from the group consisting of acrylic acid, methacrylic acid, maleic acid, itaconic acid and derivatives thereof.

[6] The water-absorbent copolymer according to any one of [1] to [5], wherein the water-absorbent copolymer has a crosslinked structure.

[7] The water-absorbent copolymer according to [6], wherein the water-absorbent copolymer is not crosslinked at the constituent unit z moiety.

[8] The water-absorbent copolymer according to any one of [1] to [7], wherein the total amount of unreacted monomers contained in the water-absorbent copolymer is 1,000 ppm or less.

[9] The water-absorbent copolymer according to any one of [1] to [8], which is used for agriculture.

[10] The water-absorbent copolymer according to [9], which is used for raising of seedling.

[11] A method for producing the water-absorbent copolymer according to any one of [1] to [10], comprising the step of adding monomers for forming the constituent unit z to monomers for forming the constituent units x and y in a divided manner or continuous manner to copolymerize the monomers.

[12] The method according to [11], wherein in a copolymerization reaction system in the step, a molar ratio of the monomers forming the constituent unit z to the monomers forming the constituent units x and y is 0.1 or less.

EFFECTS OF THE INVENTION

According to the present invention, it is possible to provide a polymer having high light resistance.

EMBODIMENTS OF THE INVENTION

Hereinafter, embodiments of the present invention will be described, but the present invention is not limited to the embodiments.

[Water-absorbent copolymer]

The water-absorbent copolymer of the present invention comprises a vinyl alcohol constituent unit x and a constituent unit z other than the vinyl alcohol constituent unit x and a vinyl ester constituent unit y. That is, the water-absorbent copolymer of the present invention comprises the constituent unit x and the constituent unit z. The constituent unit x is a vinyl alcohol constituent unit The constituent unit z is a constituent unit other than the vinyl alcohol constituent unit x and other than the vinyl ester constituent unit y. Hereinafter, the water-absorbent copolymer of the present invention is sometimes referred to as a "vinyl alcohol-based copolymer (A)".

In the vinyl alcohol-based copolymer (A), the ratio of the content of an average sequence of the constituent unit z to the content of the constituent unit z [(content of average sequence of constituent unit z/content of constituent unit z) $\times$ 100] is 50.0 mol% or less. As described above, the present inventors have found that the sequence moiety of the constituent unit z is easily cleaved by light (particularly ultraviolet rays), and as a result, the vinyl alcohol-based copolymer (A) is poor in light resistance when the content of the average sequence of the constituent unit z is high. Therefore, when the ratio is more than 50.0 mol%, it is difficult for the vinyl alcohol-based copolymer (A) to have desired light resistance.

**EP 3 992 217 A1**

The ratio of the content of the average sequence of the constituent unit z to the content of the constituent unit z is preferably 40.0 mol% or less, more preferably 30.0 mol% or less, more preferably 20 mol% or less, more preferably 15 mol% or less, more preferably 10 mol% or less, more preferably 7 mol% or less, particularly preferably 5 mol% or less. The lower limit value of the ratio is not particularly limited. The ratio is usually 0.02 mol% or more. When the ratio is equal to or less than the upper limit value, or equal to or greater than the lower limit value and equal to or less than the upper limit value, it can be easy for the vinyl alcohol-based copolymer (A) to have further excellent light resistance. From the viewpoint that it is not easily affected by inhibition of the water absorption amount by calcium ions contained in the soil, the ratio is preferably 0.001 mol% or more, more preferably 0.01 mol% or more, more preferably 0.02 mol% or more, more preferably 0.05 mol% or more, more preferably 0.08 mol% or more, more preferably 0.1 mol% or more, more preferably 0.3 mol% or more, particularly preferably 0.5 mol% or more. The ratio can be adjusted to be equal to or greater than the lower limit value and equal to or less than the upper limit value by selection of the types of monomers forming the constituent unit z, adjustment of the content of the constituent unit z in the vinyl alcohol-based copolymer (A), selection of the ratio of the monomers forming the constituent unit z to the monomers forming the constituent units x and y in the copolymerization reaction system, and/or the polymerization ratio.

In the vinyl alcohol-based copolymer (A), the content of the constituent unit z is preferably 50.0 mol% or less, more preferably 40.0 mol% or less, more preferably 35.0 mol% or less, more preferably 30.0 mol% or less, more preferably 25.0 mol% or less, more preferably less than 25.0 mol%, more preferably 20.0 mol% or less, still more preferably 15.0 mol% or less, particularly preferably 10.0 mol% or less, and preferably 1.0 mol% or more, more preferably 1.5 mol% or more, still more preferably 2.0 mol% or more, particularly preferably 4.0 mol% or more, based on the total number of moles of all constituent units forming the vinyl alcohol-based copolymer (A). When the content of the constituent unit z is equal to or less than the upper limit value, it can be easy to obtain desired light resistance, and when the content is equal to or greater than the lower limit value, it can be easy to obtain desired water absorbency. The content of the constituent unit z can be adjusted to an amount equal to or greater than the lower limit value and equal to or less than the upper limit value by, for example, adjusting the blending ratio between the monomers forming the constituent unit z and the monomers forming the constituent units x and y, the consumption rate or reactivity ratio thereof during the reaction, the reaction temperature, the amount of alkali, or the like.

The content of the vinyl alcohol constituent unit x in the vinyl alcohol-based copolymer (A) is preferably 50.0 mol% or more, more preferably 80.0 mol% or more, still more preferably 85.0 mol% or more, particularly preferably 90.0 mol% or more, and preferably 98.0 mol% or less, more preferably 97.0 mol% or less, still more preferably 96.0 mol% or less, particularly preferably 95.0 mol% or less, based on the total number of moles of all constituent units forming the vinyl alcohol-based copolymer (A). When the content of the constituent unit x is equal to or greater than the lower limit value and equal to or less than the upper limit value, the vinyl alcohol-based copolymer (A) can be easily to have a higher water absorption capacity. The content of the constituent unit x can be adjusted to an amount equal to or greater than the lower limit value and equal to or less than the upper limit value by, for example, adjusting the blending ratio between the monomers forming the constituent unit z and the monomers forming the constituent units x and y, the consumption rate or reactivity ratio thereof during the reaction, the reaction temperature, the degree of saponification, or the like.

The content of the vinyl ester constituent unit y in the vinyl alcohol-based copolymer (A) is preferably 20.0 mol% or less, more preferably 10.0 mol% or less, still more preferably 5.0 mol% or less, particularly preferably 2.0 mol% or less, based on the total number of moles of all constituent units forming the vinyl alcohol-based copolymer (A). The lower limit value of the content is not particularly limited. The content is typically 0.2 mol% or more. When the content of the constituent unit y is equal to or greater than the lower limit value and equal to or less than the upper limit value, the vinyl alcohol-based copolymer (A) can be easily to have a higher water absorption capacity. The content of the constituent unit y can be adjusted to an amount equal to or greater than the lower limit value and equal to or less than the upper limit value by, for example, adjusting the blending ratio between the monomers forming the constituent unit z and the monomers forming the constituent units x and y, the consumption rate or reactivity ratio thereof during the reaction, the reaction temperature, the degree of saponification, or the like.

The vinyl alcohol-based copolymer (A) which is the water-absorbent copolymer of the present invention may further contain constituent units other than the constituent units x, y and z. Examples of the other constituent units include constituent units derived from olefins such as ethylene, 1-butene and isobutylene; and constituent units derived from acrylamide and derivatives thereof methacrylamide and derivatives thereof, maleimide derivatives and the like. When the vinyl alcohol-based copolymer (A) of the present invention contains any of the other constituent units, the vinyl alcohol-based copolymer (A) of the present invention may contain one or more of the other constituent units. The content of the other constituent units is preferably 20.0 mol% or less, more preferably 10.0 mol% or less, still more preferably 5.0 mol% or less, and may be 0 mol%, based on the total number of moles of all constituent units forming the vinyl alcohol-based copolymer (A) of the present invention. Therefore, in one embodiment of the present invention, the water-absorbent copolymer of the present invention consists of the constituent units x, y and z. When the content the other constituent units is equal to or less than the upper limit value, it can be easy for the vinyl alcohol-based copolymer (A) of the present invention to have a further excellent water absorption capacity.

The content of each of the constituent units x, y and z, the content of constituent units other than the constituent units x, y and z when the other constituent units are contained, and the ratio of the content of the average sequence of the constituent unit z to the content of the constituent unit z can be measured by publicly-known conventional methods. Examples of such methods include solid $^{13}$C-NMR (nuclear magnetic resonance spectroscopy), FTIR (Fourier transform infrared spectroscopy), acid-base titration (a method of calculation from the consumption of acetic anhydride in reaction with a certain amount of acetic anhydride), and solution $^1$H-NMR. When the vinyl alcohol-based copolymer (A) has a crosslinked structure, the measurement can be performed after the crosslinked structure is cleaved by a common method (e.g. hydrolysis using an acid or alkali, decomposition using periodic acid, or decomposition using an oxidizing agent such as potassium permanganate). In addition, for example, when the vinyl alcohol-based copolymer (A) has an acetal structure or an ester structure as a crosslinked structure, the measurement can be performed after, for example, the crosslinked structure is cleaved by the method described in the Examples below. In the present invention, the "constituent unit" means a repeating unit forming a copolymer. For example, a vinyl alcohol constituent unit is counted as "one unit", and a structure in which two vinyl alcohol constituent units are acetalized is counted as "two units".

From the viewpoint of easily exhibiting excellent water absorbency or an excellent water absorption rate, it is preferable that the constituent unit z in the vinyl alcohol-based copolymer (A) has an ionic group or a derivative of an ionic group. That is, in a preferred embodiment, the constituent unit z has an ionic group and a derivative of an ionic group. In another preferred embodiment, the constituent unit z has a derivative of an ionic group. In another preferred embodiment, more than half of the ionic groups contained in the constituent unit z are in the form of a derivative. In a more preferred embodiment, most of the ionic groups contained in the constituent unit z are in the form of a derivative. In a particularly preferred embodiment, all of the ionic groups contained in the constituent unit z are in the form of a derivative.

The ionic group or a derivative thereof is preferably a carboxyl group, a sulfonate group, an ammonium group or a salt thereof, more preferably a carboxyl group or a salt thereof.

When the constituent unit z of the vinyl alcohol-based copolymer (A) has a carboxyl group, a sulfonate group or an ammonium group as an ionic group, examples of the vinyl alcohol-based copolymer (A) include (i-1) saponified products of copolymers of a vinyl ester and one or more selected from the group consisting of monomers having a carboxyl group, a sulfonate group or an ammonium group and derivatives of the monomers.

In the above (i-1), the monomer having a carboxyl group is not particularly limited, and examples thereof include acrylic acid, methacrylic acid, itaconic acid and maleic acid. Examples of the derivative of the monomer having the carboxyl group include anhydrides, esterified products and neutralized products of the monomer, and for example, methyl acrylate, methyl methacrylate, dimethyl itaconate, monomethyl maleate and maleic anhydride are used. Thus, in a preferred embodiment, the constituent unit z is derived from one or more types of monomers selected from the group consisting of acrylic acid, methacrylic acid, maleic acid, itaconic acid and derivatives thereof.

In the above (i-1), the monomer having a sulfonate group is not particularly limited, and examples thereof include vinylsulfonic acid, 2-acrylamide-2-methylpropanesulfonic acid and p-styrene sulfonic acid. Examples of the derivative of the monomer having a sulfonate group include esterified products and neutralized products of the monomer, and for example, sodium vinylsulfonate, sodium 2-acrylamide-2-methylpropanesulfonate and sodium p-styrenesulfonate are used.

In the above (i-1), the monomer having an ammonium group is not particularly limited, and examples thereof include diallyldimethylammonium chloride, vinyltrimethylammonium chloride, allyltrimethylammonium chloride, p-vinylbenzyltrimethylammonium chloride and 3-(methacrylamide)propyltrimethylammonium chloride. Examples of the derivative of the monomer having an ammonium group include amines of the monomer, and for example, diallylmethylamine, vinylamine, allylamine and p-vinylbenzamine 3-(methacrylamide)propylarnine are used.

In the above (i-1), the vinyl ester is not particularly limited, and examples thereof include vinyl acetate, vinyl propionate, vinyl butyrate, vinyl valerate, vinyl stearate, vinyl benzoate, vinyl trifluoroacetate and vinyl pivalate, with vinyl acetate being preferable.

In an embodiment of the present invention, when the constituent unit z of the vinyl alcohol-based copolymer (A) has an ionic group (e.g. a carboxyl group), a part or all of the ionic group may be in the form of a derivative of an ionic group, for example in the form of a salt (carboxylate when the ionic group is a carboxyl group). Examples of counter cations of salts include alkali metal ions such as lithium ions, sodium ions, potassium ions, rubidium ions and cesium ions; alkaline earth metal ions such as magnesium ions, calcium ions, strontium ions and barium ions; other metal ions such as aluminum ions and zinc ions; and onium cations such as ammonium ions, imidazolium ions, pyridinium ions and phosphonium ions. Among them, potassium ions, calcium ions and ammonium ions are preferable from the viewpoint of easily obtaining desired water absorbency. When the water-absorbent copolymer of the present invention is used in agriculture, calcium ions are more preferable from the viewpoint of easily maintaining water absorbency during contact with divalent ions contained in the soil or the culture medium, and potassium ions are more preferable from the viewpoint of growth of plants. Therefore, in a preferred embodiment of the present invention, the vinyl alcohol-based copolymer (A) has a potassium ion or an ammonium ion, preferably a potassium ion, as a counter cation of an ionic group.

In an embodiment of the present invention, when the constituent unit z of the vinyl alcohol-based copolymer (A) has an ionic group, or an ionic group and a derivative thereof the amount of the ionic group, or the amount of the ionic group and a derivative thereof is preferably 0.1 mol% or more, more preferably 1 mol% or more, particularly preferably 3 mol% or more, most preferably 5 mol% or more, and preferably 80 mol% or less, more preferably 50 mol% or less, more preferably 40 mol% or less, more preferably 30 mol% or less, still more preferably 25 mol% or less, particularly preferably 20 mol% or less, most preferably less than 18 mol%, based on all the constituent units forming the vinyl alcohol-based copolymer (A). When the amount of the ionic group or the amount of the ionic group and a derivative thereof is equal to or greater than the lower limit value, the vinyl alcohol-based copolymer (A) has further excellent water absorbency, and when the amount of the ionic group or the amount of the ionic group and a derivative thereof is equal to or less than the upper limit value, it can be easy to maintain water absorbency even during contact with divalent ions contained in the soil or the culture medium when the water-absorbent copolymer is used in agriculture. The amount of the ionic group or the amount of the ionic group and a derivative thereof can be adjusted to an amount equal to or greater than the lower limit value and equal to or less than the upper limit value by adjustment of, for example, the content of the constituent unit z, the amount of alkali during saponification, the amount of alkali during ionization, or the like. The amount of the ionic group or the amount of the ionic group and a derivative thereof in the vinyl alcohol-based copolymer (A) can be measured by, for example, solid $^{13}$C-NMR, FTIR or acid-base titration.

The content of the vinyl alcohol constituent unit in the vinyl alcohol-based copolymer (A) is preferably more than 20 mol%, more preferably 50 mol% or more, still more preferably 60 mol% or more, and preferably 98 mol% or less, more preferably 95 mol% or less, still more preferably 90 mol% or less, based on all the constituent units forming the vinyl alcohol-based copolymer (A). The content of the vinyl alcohol constituent unit can be measured by, for example, FTIR or solid $^{13}$C-NMR, and can also be calculated from the consumption amount of acetic anhydride in reaction with a certain amount of acetic anhydride.

The viscosity average polymerization degree of the vinyl alcohol-based copolymer (A) is not particularly limited, and is preferably 20,000 or less, more preferably 10,000 or less, still more preferably 4,000 or less, particularly preferably 3,000 or less from the viewpoint of ease of production. On the other hand, the viscosity average polymerization degree is preferably 100 or more, more preferably 200 or more, still more preferably 400 or more from the viewpoint of mechanical characteristics of the vinyl alcohol-based copolymer (A) and its resistance to elution in water. The viscosity average polymerization degree of the vinyl alcohol-based copolymer (A) can be measured by, for example, a method in accordance with JIS K 6726. When the vinyl alcohol-based copolymer (A) has a crosslinked structure, for example when the vinyl alcohol-based copolymer (A) has an acetal structure or an ester structure as a crosslinked structure, the measurement of the viscosity average polymerization degree can be performed after the crosslinked structure is cleaved as described above.

From the viewpoint of preventing elution in the case of use in agriculture (e.g. use in a culture medium for raising of seedling), it is preferable that the vinyl alcohol-based copolymer (A), which is the water-absorbent copolymer of the present invention, has a crosslinked structure. When the vinyl alcohol-based copolymer (A) has a crosslinked structure, the vinyl alcohol-based copolymer (A) turns into a gel form during absorption of water, so that the vinyl alcohol-based copolymer (A) is hardly eluted from, for example, a drainage hole provided in a bottom surface of a box for raising of seedling. The form of the crosslinked structure is not particularly limited, and examples thereof include crosslinked structures by an ester bond, an ether bond, an acetal bond and a carbon-carbon bond.

Examples of the ester bond include ester bonds formed between a hydroxyl group and a carboxyl group of the vinyl alcohol-based copolymer (A) when the vinyl alcohol-based copolymer (A) has a carboxyl group as an ionic group. Examples of the ether bond include ether bonds formed by dehydration condensation between hydroxyl groups of the vinyl alcohol-based copolymer (A). Examples of the acetal bond include acetal bonds formed by acetalization reaction of hydroxyl groups of two vinyl alcohol-based copolymers (A) with aldehyde having a carboxyl group when the aldehyde is used in production of the vinyl alcohol-based copolymer (A). Examples of the carbon-carbon bond include carbon-carbon bonds formed by coupling between carbon radicals of the vinyl alcohol-based copolymer (A), which are generated when the vinyl alcohol-based copolymer (A) is irradiated with an active energy ray.

One or more of these crosslinked structures may be contained. Among them, crosslinked structures by an ester bond or an acetal bond are preferable from the viewpoint of ease of production, and crosslinked structures by an acetal bond are more preferable from the viewpoint of maintenance of water retainability and light resistance during raising of seedling.

In another preferred embodiment, it is preferable that the vinyl alcohol-based copolymer (A), which is the water-absorbent copolymer of the present invention, is not crosslinked at the constituent unit z moiety. This embodiment is preferable because it can be easy to obtain an advantage such as light resistance or resistance to elution in water. This embodiment is preferable particularly when the constituent unit z has an ionic group or an ionic group and a derivative thereof because the constituent unit z is not consumed by crosslinking, and thus it can be easy to obtain further excellent water absorbency or a further excellent water absorption rate in addition to the above-described advantage. By confirming that the difference between the content of the constituent unit z in the vinyl alcohol-based copolymer (A) before cleavage of the crosslinked structure and the content of the constituent unit z in the vinyl alcohol-based copolymer (A) after cleavage of the crosslinked structure is -0.5 mol% to + 0.5 mol%, it can be determined that the vinyl alcohol-based copolymer (A) is not crosslinked at the constituent unit z moiety. For example, when the vinyl alcohol-based copolymer (A) has an acetal structure or an ester structure as a crosslinked structure, it can be determined by cleaving the crosslinked structure in accordance with, for example, the method described in the Examples below, and confirming that the difference between the contents of the constituent unit z before and after the cleavage is -0.5 mol% to + 0.5 mol%.

In another preferred embodiment, the total amount of unreacted monomers contained in the vinyl alcohol-based copolymer (A), which is the water-absorbent copolymer of the present invention, is preferably 1,000 ppm or less, more preferably 500 ppm or less, particularly preferably 100 ppm or less. When the total amount of unreacted monomers is equal to or less than the upper limit value, better growth of plants can be easily achieved when the water-absorbent copolymer of the present invention is used in agriculture. The total amount of the unreacted monomer can be adjusted to be equal to or less than the upper limit value by adjusting, for example, the blending ratio of the monomers forming the constituent unit z and the monomers forming the constituent units x and y, the consumption rate or the reactivity ratio thereof during the reaction, the washing conditions in preparation of the vinyl alcohol-based copolymer (A), or the drying temperature or time. The total amount of unreacted monomers can be measured by a publicly-known conventionally method. Such measurement methods include gas chromatography, liquid chromatography, and solution $^1$H-NMR. The lower limit of the total amount of unreacted monomers is 0.01 ppm, which is a detection limit in those measurement methods.

The water-absorbent copolymer of the present invention is preferably in the form of particles. When the water-absorbent copolymer is in the form of particles, the volume average particle diameter of the particles is preferably 10 $\mu$m or more, more preferably 50 $\mu$m or more, still more preferably 80 $\mu$m or more, and preferably 1,000 $\mu$m or less, more preferably 500 $\mu$m or less, still more preferably 300 $\mu$m or less. When the volume average particle diameter is equal to or greater than the lower limit value, it can be easy to obtain excellent handleability and an excellent dust suppression effect, and when the volume average particle diameter is equal to or less than the upper limit value, it can be easy to obtain an excellent water absorption rate. The volume average particle diameter can be measured by, for example, laser difiraction/scattering.

The absorption amount of pure water in the water-absorbent copolymer of the present invention is preferably 10 g/g or more, more preferably 20 g/g or more, more preferably 30 g/g or more, more preferably 40 g/g or more, more preferably 50 g/g or more, still more preferably 80 g/g or more, particularly preferably 100 g/g or more, and preferably 1,000 g/g or less, more preferably 800 g/g or less, still more preferably 500 g/g or less, particularly preferably 300 g/g or less. When the absorption amount of pure water is equal to or greater than the lower limit value, the effect of improving the water retainability of a culture medium can be easily enhanced. When the absorption amount of pure water is equal to or less than the upper limit value, the weather resistance of the water-absorbent copolymer is improved, so that growth of plants can be easily improved. The absorption amount of pure water can be adjusted to an amount equal to or more than the lower limit value and equal to or less than the upper limit value by, for example, the content of each of the constituent units x, y and z, the type of the constituent unit z, and the content of the crosslinked structure. The absorption amount of pure water can be measured by the method described in the Examples below.

[Method for producing water-absorbent copolymer]

The water-absorbent copolymer of the present invention can be produced by, for example, a method including the step of adding monomers for forming the constituent unit z to monomers for forming the constituent units x and y in a divided manner or continuous manner to copolymerize the monomers. By divided addition or continuous addition of the monomers for forming the constituent unit z, the ratio of the content of the average sequence of the constituent unit z to the content of the constituent unit z can be set to 50.0 mol% or less. The monomer for forming the constituent unit z is not particularly limited, and the monomers exemplified in the section [Water-absorbent copolymer] can be used. The monomers for forming the constituent units x and y are not particularly limited, and the vinyl esters exemplified in the section [Water-absorbent copolymer] can be used.

In a preferred embodiment, the molar ratio of the monomers for forming the constituent unit z to the monomers for forming the constituent units x and y (the number of moles of monomers for forming constituent unit z/the number of moles of monomers for forming constituent units x and y) in the copolymerization reaction system in the step is preferably 0.1 or less, more preferably 0.05 or less, particularly preferably 0.01 or less. When the monomers forming the constituent unit z are added in a divided manner, the lower limit value of the molar ratio is 0 because there is a time interval between the additions. In the copolymerization step, a publicly-known polymerization initiator can be used.

In another preferred embodiment, for reducing the content of the average sequence of the constituent unit z based on the content of the constituent unit z to 50.0 mol% or less, it is preferable that in the copolymerization step, the monomers for forming the constituent unit z are added in a continuous manner to the monomers for forming the constituent units x and y in such a manner that the molar ratio of the monomers for forming the constituent unit z to the monomers for forming the constituent units x and y is constant The molar ratio is preferably 0.0005 or more, more preferably 0.001 or more, and preferably 0.1 or less, more preferably 0.01 or less.

When a water-absorbent copolymer having other constituent units in addition to the constituent units x, y and z is produced, monomers for forming the other constituent units can be mixed with the monomers for forming the constituent units x and y in the above copolymerization step. In such a case, the molar ratio of the number of moles of the monomers forming the constituent unit z to the total number of moles of the monomers forming the constituent units x and y and the monomers forming constituent units other than the constituent units x, y and z in the copolymerization reaction system is preferably 0.1 or less, more preferably 0.05 or less, particularly preferably 0.01 or less. As monomers forming other constituent units other than the constituent units x, y and z, the monomers for forming other constituent units as exemplified in the section [Water-absorbent copolymer] can be used.

The polymerization ratio in the copolymerization reaction system is preferably 5% or more, more preferably 10% or more, particularly preferably 20% or more, and preferably 80% or less, more preferably 50% or less, particularly preferably 40% or less. When the polymerization ratio is equal to or greater than the lower limit value and equal to or less than the upper limit value, it can be easy to avoid an excessive increase in viscosity of the copolymerization reaction system while allowing the copolymerization reaction to suitably proceed, so that a suitable viscosity average polymerization degree can be easily obtained The polymerization ratio can be determined by, for example, a method for measuring the solid content (polymer content) concentration by volatilizing the monomer and the solvent of the polymerization solution or a method for measuring the remaining monomer concentration by titration.

Subsequently, the obtained copolymer can be saponified by a publicly-known method. The degree of saponification of the copolymer is not particularly limited. The light resistance of the water-absorbent copolymer of the present invention is significantly influenced by the content of the sequence of the constituent unit z in the copolymer, the water absorption capacity of the water-absorbent copolymer of the present invention is significantly influenced by the content of the constituent unit z and the amount of the crosslinked structure in the copolymer, and the influence of the degree of saponification on the light resistance or the water absorption capacity of the water-absorbent copolymer is extremely small. Therefore, the degree of saponification may be, for example, 30 mol% or more, 60 mol% or more (e.g. 70 mol% or more), or 98 mol% or more (e.g. 100 mol%).

Subsequently, when the water-absorbent copolymer has a crosslinked structure, the obtained saponified product can be subjected to a crosslinking reaction. The reaction of the saponification product with the crosslinking agent may be carried out by a publicly-known method. The crosslinking agent is not particularly limited. Examples of the crosslinking agent in production of a water-absorbent copolymer having an acetal structure as a crosslinked structure include glyoxal, malonaldehyde, succinaldehyde, glutaraldehyde, 1,9-nonanedial, adipoaldehyde, malealdehyde, tartaraldehyde, citraldehyde, phthalaldehyde, isophthalaldehyde and terephthalaldehyde. From the viewpoint of easily obtaining a desired water absorption capacity, the crosslinking agent may be used in an amount which ensures that the amount of the crosslinked structure in the water-absorbent copolymer is preferably 0.001 mol% or more, more preferably 0.005 mol% or more, still more preferably 0.01 mol% or more, even more preferably 0.03 mol% or more, and preferably 0.5 mol% or less, more preferably 0.4 mol% or less, still more preferably 0.3 mol% or less. The amount of the crosslinked structure means the amount of constituent units forming the crosslinked structure based on all the constituent units forming the water-absorbent copolymer.

In a preferred embodiment, the method for producing a water-absorbent copolymer includes the step of reacting a crosslinking agent with a saponified product swollen by a solvent, which is capable of swelling the saponified product, in the presence of the solvent.

In the present invention, the "solvent capable of swelling a saponified product" is not particularly limited as long as it is capable of swelling a saponified product and is not dissolved at a temperature during the reaction. Examples of the solvent include dialkyl ketones such as acetone and 2-butanone; nitriles such as acetonitrile; alcohols such as methanol, ethanol, 1-propanol, 2-propanol, 1-butanol, 2-butanol, amyl alcohol, isoamyl alcohol, hexanol, cyclohexanol, octanol and tert-butanol; ethers such as 1,4-dioxane, tetrahydrofuran, 1,2-dimethoxyethane and diglyme; diol compounds such as ethylene glycol and triethylene glycol; carboxylic acid amides such as acetamide, N,N-dimethylformamide, N,N-dimethylacetamide and N-methylpyrrolidone; organic solvents such as dimethyl sulfoxide and phenol; and water. Among them, in view of ease of removal of the solvent from the crosslinked product obtained after heterogeneous crosslinking reaction, the solubility of the carbonyl compound and the acid catalyst in the solvent, and industrial availability of the solvent, the solvent is preferably at least one selected from the group consisting of dialkyl ketone, nitrile, alcohol, ether and water, more preferably at least one selected from the group consisting of acetone, 2-butanone, acetonitrile, methanol, ethanol, 1-propanol, 2-propanoL tert-butanol, 1,4-dioxane, tetrahydrofuran and water, still more preferably at least one selected from the group consisting of acetone, 2-butanone, acetonitrile, methanol, 2-propanol, 1,4-dioxane, tetrahydrofuran and water. One of these organic solvents may be used alone, or two or more thereof may be mixed and used.

In this embodiment, the saponified product swollen by a solvent capable of swelling the saponified product is reacted with a crosslinking agent in the presence of the solvent, and therefore the crosslinked product can be easily taken out without requiring a precipitation step.

The saponified product before swelling is preferably in the form of particles. The volume average particle diameter of the saponified product in the form of particles is preferably 10 μm or more, more preferably 50 μm or more, particularly preferably 80 μm or more, and preferably 1,000 μm or less, more preferably 500 μm or less, particularly preferably 300 μm or less. When the volume average particle diameter is equal to or greater than the lower limit value, it can be easy to obtain excellent handleability, and when the volume average particle diameter is equal to or less than the upper limit value, it can be easy to obtain an excellent solvent absorption rate. The volume average particle diameter can be adjusted to an amount equal to or more than the lower limit value and equal to or less than the upper limit value by adjustment of, for example, saponification conditions and/or grinding conditions. The volume average particle diameter can be measured by, for example, laser diffraction/scattering.

When a water-absorbent copolymer is produced in which the constituent unit z of the water-absorbent copolymer has a carboxyl group as an ionic group, and a part or all of the carboxyl groups are carboxylates, examples of the method for production thereof include a method in which a neutralized product of a monomer having a carboxyl group is used as a monomer for forming the constituent unit z in the copolymerization step; and a method in which a crosslinked product obtained after the reaction with a crosslinking agent is neutralized.

The method for neutralizing the crosslinked product is not particularly limited. For example, the neutralization can be performed using one or more neutralizing agents selected from the group consisting of potassium hydroxide, sodium hydroxide, lithium hydroxide, magnesium hydroxide, calcium hydroxide and ammonia.

When a water-absorbent crosslinked copolymer is produced in which the water-absorbent copolymer is not crosslinked at the constituent unit z moiety, examples of the method for production thereof include a method in which crosslinking is performed at the constituent unit x moiety using the crosslinking agent; and a method in which a monomer containing two or more polymerizable functional groups is added to the copolymerization reaction system.

The saponified product, crosslinked product and neutralized product may be subjected to a washing and/or drying step if necessary. Washing with a solvent in which unreacted monomers are easily dissolved (typically the same as the solvent used in the copolymerization step) enables reduction of the total amount of unreacted monomers contained in the saponified product, the crosslinked product and the neutralized product The total amount of unreacted monomers can also be reduced by increasing the drying temperature and the drying time. When the saponified product, the crosslinked product and the neutralized product are subjected to a washing and/or drying step, washing and/or drying can be performed in a short time when they are in the form of particles, particularly in the form of particles having a small particle diameter.

The water-absorbent copolymer produced by the production method of the present invention contains the vinyl alcohol constituent unit x and the constituent unit z other than the vinyl alcohol constituent unit x and the vinyl ester constituent unit y, and the ratio of the content of an average sequence of the constituent unit z to the content of the constituent unit z is 50.0 mol% or less.

The water-absorbent copolymer of the present invention itself has excellent light resistance, and therefore can be used for applications in which light resistance is required. Therefore, in an embodiment of the present invention, the water-absorbent copolymer of the present invention is used for agriculture, and in another embodiment, the water-absorbent copolymer of the present invention is used for raising of seedling.

When the water-absorbent copolymer of the present invention is used for agriculture or raising of seedling, the copolymer can be used as a culture medium for plants. In this case, the water-absorbent copolymer of the present invention may be used in combination with an optional component if necessary.

[Optional component]

Examples of the optional component include polysaccharides such as starch, modified starch, sodium alginate, chitin, chitosan, cellulose and derivatives thereof; resins such as polyethylene, polypropylene, alkyd resin, phenol resin, ethylene-propylene copolymers, polystyrene, acrylonitrile-styrene copolymers, acrylonitrile-butadiene-styrene copolymers, polyvinyl chloride, polycarbonate resin, polyethylene terephthalate, polybutylene terephthalate, polylactic acid, polysuccinic acid, polyamide 6, polyamide 6·6, polyamide 6·10, polyamide 11, polyamide 12, polyamide 6·12, polyhexamethylenediamine terephthalamide, polyhexamethylenediamine isophthalamide, polynonamethylenediamine terephthalamide, polyphenylene ether, polyoxymethylene, polyethylene glycol, polypropylene glycol, polytrimethylene glycol, polytetramethylene glycol, polyurethane, polyvinyl acetate, ethylene-vinyl acetate copolymers, polyacrylic acid, polyacrylic acid esters, polyacrylic acid salts, polyacrylamide, polymethacrylic acid, polymethacrylic acid esters, polymethacrylic acid salts, ethylene-acrylic acid copolymers, ethylene-acrylic acid ester copolymers, ethylene-acrylic acid salt copolymers, ethylene-methacrylic acid copolymers, ethylene-methacrylic acid ester copolymers and ethylene-methacrylic acid salt copolymers; rubbers and elastomers such as natural rubber, synthetic isoprene rubber, chloroprene rubber, silicone rubber, fluororubber, urethane rubber, acrylic rubber, styrene-based thermoplastic elastomer, olefin-based thermoplastic elastomer, ester-based thermoplastic elastomer, urethane-based thermoplastic elastomer and amide-based thermoplastic elastomer, and ultraviolet absorbers, antioxidants, light stabilizers, plasticizers, organic solvents, antifoaming agents, thickening agents, surfactants, lubricants, antifungal agents and antistatic agents. These components can be used alone, or in combination of two or more thereof.

When the culture medium contains any of the above-described components, the total content thereof may be in any range as long as the effect of the present invention is not impaired, and the total content is typically 30 mass% or less, preferably 20 mass% or less, more preferably 10 mass% or less, for example 5 mass% or less based on the total mass of the culture medium.

In the description of the preferred content of optional components when the culture medium contains the optional components, the mass of the solid constituent components in the culture medium is a mass in a dry state. In the present invention, the term "dry state" refers to a state in which the constituent component does not contain a volatile component such as water or an organic solvent By, for example, performing vacuum drying at 40°C until the mass of each of the constituent components reaches a constant weight, these components can be brought into a dry state.

The culture medium can also contain culture soil as another optional component When the culture medium contains culture soil, roots grow in gaps in the culture soil, and thus it can be easy for the roots to appropriately intertangle, and it can be easy for the culture medium to have excellent drainage properties and air permeability. The culture soil is not particularly limited, and one of commercially available culture soils can be used alone, or two or more thereof can be used in combination. In addition, an optional component other than culture soil can be deposited on the culture soil by a conventional method (e.g. a method in which a solution or a dispersion liquid of an optional component is sprayed to culture soil and then dried).

From the viewpoint of easily obtaining further excellent drainage properties and air permeability, the culture soil is preferably granular. The particle diameter of the granular culture soil is preferably 0.2 to 20 mm, more preferably 0.5 to 10 mm, particularly preferably 1 to 5 mm. For adjusting the particle diameter of the granular culture soil within the above-described range, commercially available granular soil can also be sieved and used. Granulation methods such as a compression granulation method, an extrusion granulation method, a rolling granulation method, and a fluidized bed granulation method can be used for production of granular culture soil. The particle diameter of the granular culture soil can be measured by, for example, the following method. Thirty particles are randomly selected from granular culture soil, the diameter of each particle is measured using a caliper, and the average value thereof is taken as the particle diameter of the granular culture soil. When the particle is not spherical, the average value of the longest side and the shortest side is taken as the diameter of the particle.

When the culture medium contains culture soil, the content of the culture soil is preferably 20 to 99.9999 mass%, more preferably 70 to 99.95 mass%, particularly preferably 80 to 99.9 mass%, most preferably 90 to 99.8 mass% based on the total mass of the culture medium.

Examples of still another optional component include animal and plant substances such as peat coal, grass peat, peat, peat moss, cocopeat, rice husk, humic fermented materials, charcoal, diatomaceous earth calcined grains, shell fossil powder, shell powder, crab shell, VA mycorrhizal and microbial materials; mineral substances such as vermiculite, perlite, bentonite, natural zeolite, synthetic zeolite, plaster, fly ash, rock wool, kaolinite, smectite, montmorillonite, sericite, chlorite, glauconite and talc; fertilizers; and combinations thereof. These may be disinfected or sterilized if necessary, and may be used together with a pH adjuster or a pesticide. When the culture medium contains any of these optional components, the total content thereof may be in any range as long as the effect of the present invention is not impaired, and the total content is typically 50 mass% or less, preferably 30 mass% or less based on the total mass of the culture medium.

Examples of the fertilizer include three major fertilizers such as nitrogen-based fertilizer, phosphorus-based fertilizer and potassium-based fertilizer, fertilizers containing elements essential for plants, such as calcium, magnesium, sulfur, iron, copper, manganese, zinc, boron, molybdenum, chlorine and nickel; and composts such as bark compost, cow dung, pig dung, chicken dung, raw garbage and pruned waste. Examples of the nitrogen-based fertilizer include ammonium sulfate, ammonium chloride, ammonium nitrate, sodium nitrate, lime nitrate, humic acid ammonia fertilizers, urea, lime nitrogen, lime ammonium nitrate, sodium ammonium nitrate and magnesium nitrate. Examples of the phosphorus-based fertilizer include superphosphate of lime, double superphosphate of lime, meltable phosphorus fertilizers, humic acid phosphoric acid fertilizers, burnt phosphorus, heavy burnt phosphorus, phosphorus star, magnesium perphosphate, mixed phosphoric acid fertilizers, by-product phosphoric acid fertilizers and high-concentration phosphoric acid. Examples of the potassium-based fertilizer include potassium sulfate, potassium chloride, potassium magnesium sulfate, potassium carbonate, potassium bicarbonate and potassium silicate. These fertilizers may be used in a state of a solid, a paste, a liquid, a solution or the like, or may be used as a coated fertilizer.

Examples of the pesticide include insecticides, bactericides, insecticide-bactericide combinations, herbicides, rodenticides, preservatives and plant growth regulators.

When the water-absorbent copolymer of the present invention is combined with a fertilizer to prepare a culture medium, the fertilizer is used as a coated fertilizer in a preferred embodiment. The coated fertilizer is one obtained by coating a fertilizer with a resin. Examples of the resin include polyolefins. When a coated fertilizer is used, the fertilizer can be continuously supplied to the soil as the resin is decomposed. In addition, when a mat seedling is prepared using a granular coated fertilizer, the strength of the resulting mat seedling tends to increase. The particle size of the coated fertilizer is preferably 1 mm to 10 mm, more preferably 3 mm to 6 mm. When a coated fertilizer is used, the content of the coated fertilizer in the culture medium is preferably 10 to 99.99 mass%, more preferably 15 to 90 mass%, particularly preferably 20 to 80 mass%, most preferably 30 to 60 mass%.

When the water-absorbent copolymer of the present invention is used in combination with an optional component, it is preferable to use a mixture of the water-absorbent copolymer with the optional component The mixing method is not particularly limited. A culture medium for agriculture or raising of seedling can be prepared by mixing a water-absorbent copolymer with an optional component by a common method.

[Examples]

Hereinafter, the present invention will be described in further detail with reference to the Examples, which do not limit the present invention.

[Raw materials used for synthesis of water-absorbent copolymer]

Methanol, vinyl acetate, sodium hydroxide, potassium hydroxide, methyl acrylate, dimethyl maleate, methyl methacrylate, dimethyl itaconate, sodium 2-acrylamide-2-methylpropane sulfonate, azobisisobutyronitrile, 25 mass% aqueous glutaraldehyde solution, and acetonitrile: all manufactured by Wako Pure Chemical Industries, Ltd.

[Measurement Item and Measurement Method]

<Content $z_1$ of constituent unit z and content $z_2$ of average sequence>

The water-absorbent copolymer (1 g) was mixed with 1,000 g of a 1 mass% aqueous sulfuric acid solution, and the mixture was stirred under reflux by heating until the water-absorbent copolymer was dissolved. Subsequently, sodium hydroxide was added to neutralize the mixture, and the mixture was dried to obtain a decrosslinked copolymer.

The obtained copolymer was subjected to solution $^1$H-NMR to determine the content $z_1$ of the constituent unit z based on the total number of moles of all the constituent units forming the copolymer, and the content $z_2$ of the average sequence of the constituent unit z based on the content $z_1$ of the constituent unit z.

<Detecdon of crosslinked site>

The water-absorbent copolymer was subjected to solid $^{13}$C-NMR to determine the content $z_3$ of the constituent unit z based on the total number of moles of all the constituent units forming the copolymer.

Subsequently, the same operation as the decrosslinking operation described in the section <content $z_1$ of constituent unit z and content $z_2$ of average sequence> was carried out to obtain a decrosslinked copolymer. The obtained decrosslinked copolymer was subjected to solid $^{13}$C-NMR to determine the content $z_4$ of the constituent unit z based on the total number of moles of all the constituent units forming the copolymer.

When the difference between the content $z_3$ in the water-absorbent copolymer and the content $z_4$ in the decrosslinked water-absorbent copolymer was -0.5 mol% to + 0.5 mol%, it was determined that the water-absorbent copolymer was not crosslinked at the constituent unit z moiety.

<Total amount of unreacted monomers contained in water-absorbent copolymer>

The water-absorbent copolymer (0.1 g) was mixed with 100 g of pure water, and the mixture was stirred at 23°C for 48 hours. The aqueous layer comprising extracted unreacted monomers was analyzed by a liquid chromatography to measure the total amount of the unreacted monomers.

<Absorption amount of pure water>

The absorption amount of pure water in the water-absorbent copolymer obtained in each of Examples and Comparative Examples was measured in accordance with JIS K 7223, and the absorption amount of pure water X [g/g] per unit mass of the sample was calculated from the following equation.

[Mathematical Formula 1]

X = [(mass of sample after absorption of pure water) - (mass of sample before absorption of pure water)] / (mass of sample before absorption of pure water)

<Light resistance>

The ratio of elution of the water-absorbent copolymer in pure water was measured before and after irradiation with ultraviolet rays, and from the difference therebetween, the light resistance of the water-absorbent copolymer was evaluated.

First, the ratio of elution of the water-absorbent copolymer in pure water before irradiation with ultraviolet rays was measured Specifically, 0.10 g of the water-absorbent copolymer was mixed with 100 g of pure water, and the mixture was left to stand at 23°C for 16 hours. Subsequently, the mixture was filtered using a Tetoron 280 mesh, the filtered solid substance was vacuum-dried at 40°C for 16 hours, and the mass $w_1$ (g) was then measured.

[Mathematical Formula 2]

Elution ratio 1 = {(0.10 - $W_1$) / 0.10} × 100

Measurement was performed three times, and the average value of the measurements was adopted as an elution ratio 1 (unit: mass%).

Subsequently, the ratio of elution of the water-absorbent copolymer in pure water after irradiation with ultraviolet rays was measured. Specifically, 0.10 g of the water-absorbent copolymer was mixed with 100 g of pure water were mixed, and the obtained mixture was put in a 9 mL glass screw bottle (LABORAN PACK from AS ONE Corporation) and sealed. The sealed screw bottle was attached to a xenon weather meter SX75 (Suga Test Instruments Co., Ltd.), and irradiation was performed to an integrated irradiance of 14.4 J/m$^2$ (irradiance equivalent to about 3 weeks of sunlight outdoors) under the conditions of a screw bottle irradiance of 130 W/m$^2$ (measurement wavelength: 300 to 400 nm), a tank internal temperature of 25°C, a tank internal humidity of 50% RH and a black panel temperature of 60°C. Pure water (95 mL) was added to the water-absorbent copolymer after irradiation, and the mixture was left to stand at 23°C for 16 hours. Subsequently, the mixture was filtered using a Tetoron 280 mesh, the filtered solid substance was vacuum-dried at 40°C for 16 hours, and the mass $w_2$ (g) was then measured.

[Mathematical Formula 3]

Elution ratio 2 = {(0.10 - $W_2$) / 0.10} × 100

Measurement was performed three times, and the average value of the measurements was adopted as an elution ratio 2 (unit: mass%).

The light resistance (unit: mass%) of the water-absorbent copolymer was determined from the following equation.

[Mathematical Formula 4]

Light resistance = elution ratio 2 - elution ratio 1

It can be said that the smaller the value of the light resistance calculated from the equation above, the better the light resistance.

<Growth of Plant>

The water-absorbent copolymer (30 g) was uniformly mixed with 1,500 g of granular soil (containing N-$P_2O_5$-$K_2O$ = 0.5-1.5-0.5 g/kg as fertilizer, average particle diameter: 2.7 mm) to prepare a culture medium. 60 mass% of the culture medium was laid in a box for raising of paddy rice seedling, which has an inner size of 58 cm × 28 cm, and 1,000 mL of water was poured with a water pot for 5 seconds to perform irrigation. Germination-stimulated unhulled rice (variety: Koshihikari) (200 g) was uniformly spread, and the remaining culture medium (40 mass% of the prepared culture medium) was then uniformly laid thereon to prepare a box for raising of paddy rice seedling, which contained the culture medium, germination-stimulated unhulled rice and water. The above operation was further carried out twice to prepare three identical boxes for raising of paddy rice seedling. After the process of budding in a budding chamber at 30°C and a humidity of 100% over 2 days, unloading examination was conducted. The examination was conducted in each of three boxes for raising of seedling, and the average value for three boxes was adopted as a budding ratio.

The number of buds (N1) that had germinated and emerged on the covering soil was visually counted. The budding ratio (unit: %) was calculated from the following equation using the number (N2) of grains of the germination-stimulated unhulled rice seeded.

$$[\text{Mathematical Formula 5}]$$
$$\text{Budding ratio} = (N1/N2) \times 100$$

Example 1

[Copolymerization]

To a 3L reactor equipped with a stirrer, a reflux condenser, an argon introduction tube, a monomer dropwise addition port and a polymerization initiator addition port, 640 g of vinyl acetate, 250 g of methanol and 1.1 g of methyl acrylate as a monomer for forming a constituent unit z were introduced, and argon substitution of the inside of the reactor was performed by argon gas bubbling for 30 minutes. In another container, a solution with methyl acrylate dissolved in methanol at a concentration of 40 mass% was prepared as a delay solution, and argon substitution of the inside of the container was performed with argon by argon gas bubbling. Heating of the reactor was started, and when the temperature inside the reactor reached 60°C, 0.150 g of 2,2'-azobisisobutyronitrile (AIBN) as a polymerization initiator was added to initiate a copolymerization reaction of vinyl acetate with methyl acrylate. During the procession of the copolymerization reaction, the prepared delay solution was continuously added to the copolymerization reaction system by dropwise addition so that the molar ratio of methyl acrylate to vinyl acetate was 0.1 or less in the copolymerization reaction system. The copolymerization reaction was allowed to proceed at 60°C for 205 minutes. Thereafter, the copolymerization reaction system was cooled to stop copolymerization. The total amount of the methyl acrylate solution added until the copolymerization was stopped was 29.7 mL, and the polymerization ratio at the time of stopping the copolymerization was 35%.

Next, the unreacted vinyl acetate monomer was removed while methanol was sometimes added at 30°C under reduced pressure to obtain a methanol solution of the copolymer (concentration: 23 mass%).

[Saponification]

Next, 8.5 g of methanol was added to 65 g of the obtained methanol solution (the amount of the copolymer in the solution was 15 g), 1.3g of an alkali solution (10 mass% methanol solution of sodium hydroxide) was added thereto, and the mixture was saponified at 40°C. Since a gel-like material was formed about 10 minutes after the addition of the alkali solution, the mixture was ground by a grinder, and left to stand at 40°C for 1 hour to advance saponification. Thereafter, 200g of methyl acetate was added to neutralize the remaining alkali. Completion of the neutralization was confirmed using a phenolphthalein indicator, filtration was then performed, and a white solid was collected by filtration. Next, 500 g of methanol was added to the obtained white solid, and the mixture was left to stand at room temperature for 1 hour to wash the white solid. This washing operation was repeated 3 times, and the liquid was then removed by centrifugation. The obtained white solid was dried at 40°C for 24 hours using a vacuum dryer to obtain polyvinyl alcohol having a constituent unit derived from methyl acrylate (hereinafter, referred to as "polyvinyl alcohol a"). The degree of saponification of the polyvinyl alcohol a was 98.6 mol%.

[Crosslinking]

To a three-necked separable flask equipped with a reflux condenser and a stirring blade, 58.9 g of acetonitrile, 6.28 g of ion-exchanged water, 0.31 g of a 25 mass% aqueous glutaraldehyde solution and 20 g of the polyvinyl alcohol a were introduced, and the mixture was stirred at 23°C to disperse the polyvinyl alcohol a. To the obtained dispersion, 12.38 g of a 16.9 mass% aqueous sulfuric acid solution was added dropwise over 15 minutes, and the mixture was heated to 65°C and reacted for 6 hours. After the reaction, the polymer was taken out by filtration, and the polymer collected by filtration was then washed six times with 160 g of methanol.

[Ionization]

The polymer after washing was introduced into a three-necked separable flask equipped with a reflux condenser and a stirring blade, 71 g of methanol 13.3 g of ion-exchanged water and 5.7 g of potassium hydroxide were added thereto, and the mixture was reacted at 65°C for 2 hours. After the reaction, the polymer was taken out by filtration, and the polymer collected by filtration was then washed six times with 160 g of methanol and vacuum-dried at 40°C for 12 hours to obtain a target water-absorbent copolymer (hereinafter, referred to as a "water-absorbent copolymer a"). The water-absorbent copolymer a was measured for the above-described evaluation items. Table 1 shows the results. The water-absoibent copolymer a was not crosslinked at the methyl acrylate-derived constituent unit moiety.

Examples 2 to 9 and Comparative Examples 1 to 4

Except that the conditions of copolymerization, saponification, crosslinking and ionization were changed as shown in Table 1 below, the same procedure as in Example 1 was carried out to produce and evaluate various water-absorbent copolymers (hereinafter, referred to as "water-absorbent copolymer b" to "water-absorbent copolymer m", respectively). Table 1 shows the results. The reaction time was adjusted so as to obtain a desired polymerization ratio. In addition, any of the water-absorbent copolymers b to m was not crosslinked at the constituent unit z moiety.

Comparative Example 5

Except that the conditions of copolymerization, saponification, crosslinking and ionization were changed as shown in Table 1 below, and that the delay solution was added dropwise for 30 minutes instead of 205 minutes, and a copolymerization reaction was then allowed to proceed without dropwise addition of the delay solution, the same procedure as in Example 1 was carried out to produce and evaluate a water-absorbent copolymer (hereinafter, referred to as a "water-absorbent copolymer n"). Table 1 shows the results. The reaction time was adjusted so as to obtain a desired polymerization ratio. In addition, in the copolymerization reaction system in the dropwise addition step, the molar ratio of methyl acrylate to vinyl acetate was more than 0.1, and the water-absorbent copolymer n was not crosslinked at the methyl acrylate-derived constituent unit moiety.

Comparative Example 6

Except that the conditions of copolymerization, saponification, crosslinking and ionization were changed as shown in Table 1 below, and that the number of washings in each of the steps of saponification, crosslinking and ionization was changed to 1, the same procedure as in Example 1 was carried out to produce and evaluate a water-absorbent copolymer (hereinafter, referred to as a "water-absorbent copolymer o").

Table 1 shows the results. The reaction time was adjusted so as to obtain a desired polymerization ratio. In addition, the water-absorbent copolymer o was not crosslinked at the methyl acrylate-derived constituent unit moiety.

[Table 1]

| | | | Conditions | | | | | | | | | Analysis results | | | | | | Evaluation results | | | |
|---|---|---|---|---|---|---|---|---|---|---|---|---|---|---|---|---|---|---|---|---|---|
| | | Water-absorbent copolymer | Copolymerization | | | | | | Saponification | Crosslinking | Ionization | | | | | | | | | | |
| | | | Vinyl acetate [g] | Amount of initially introduced methanol [g] | Monomer for forming constituent unit z | | Amount of dropwise-added delay solution [mL] | Polymerization ratio [%] | Aqueous alkali solution [g] | 25 mass% aqueous glutaraldehyde solution [g] | Potassium hydroxide [g] | Saponification degree [%] | Content z1 of constituent unit z [mol%] | Content z2 of average sequence of constituent unit z | Ratio of z2 to z1 (z2/z1) × 100 [mol%] | Total amount of unreacted monomers [ppm] | Absorption amount of pure water [g/g] | Elution ratio 1 [mass%] | Elution ratio 2 [mass%] | Light-resistance Elution ratio 2 - elution ratio 1 [mass%] | Budding ratio [%] |
| | | | | | Type | Amount of initially introduced monomer | | | | | | | | | | | | | | | |
| Example 1 | a | | 250 | Methyl acrylate | 1.1 | 29.7 | 35 | 1.3 | 0.31 | 5.7 | 98.6 | 5.2 | 0.08 | 1.5 | 0.6 | 105 | 8 | 10 | 2 | 85 |
| Example 2 | b | | 241 | | 2.3 | 62.8 | | 1.3 | 0.61 | 5.7 | 98.6 | 10.1 | 0.34 | 3.4 | 1.1 | 100 | 10 | 17 | 7 | 86 |
| Example 3 | c | 640 | 231 | | 3.7 | 99.6 | | 3.9 | 0.92 | 11.4 | 98.1 | 14.3 | 0.83 | 5.8 | 2.3 | 120 | 13 | 21 | 8 | 88 |
| Example 4 | d | | 208 | | 7.2 | 188.0 | | 6.5 | 1.53 | 11.4 | 99.2 | 25.9 | 2.81 | 10.8 | 10.4 | 97 | 16 | 23 | 7 | 82 |
| Example 5 | e | | 163 | | 15.2 | 375.0 | | 10.4 | 2.44 | 22.8 | 98.4 | 40.2 | 8.85 | 22.0 | 30.7 | 114 | 19 | 33 | 14 | 84 |
| Example 6 | f | | 239 | Dimethyl maleate | 3.7 | 72.0 | | 1.3 | 1.22 | 5.7 | 99.3 | 9.7 | 0.01 | 0.1 | 0.9 | 81 | 17 | 20 | 3 | 82 |
| Example 7 | g | | 230 | Methyl methacrylate | 4.7 | 104.2 | | 1.3 | 0.61 | 11.4 | 99.1 | 10.4 | 1.10 | 10.6 | 1.1 | 96 | 13 | 17 | 4 | 78 |
| Example 8 | h | | 228 | Dimethyl itaconate | 5.8 | 113.8 | | 1.3 | 1.22 | 11.4 | 98.8 | 10.8 | 0.10 | 0.9 | 1.9 | 79 | 19 | 26 | 7 | 77 |
| Example 9 | i | | 214 | Sodium 2-acrylamide-2-methylpropane sulfonate | 8.0 | 165.3 | | 1.3 | 0.61 | 5.7 | 98.9 | 9.2 | 0.53 | 5.8 | 3.1 | 88 | 13 | 23 | 10 | 77 |
| Comparative Example 1 | j | 120 | 400 | Methyl acrylate | 42.2 | 0 | 96 | 1.3 | 0.31 | 5.7 | 98.7 | 23.4 | 14.1 | 60.3 | 10.1 | 94 | 18 | 46 | 28 | 85 |
| Comparative Example 2 | k | 640 | 321 | | 107.3 | 0 | 10 | 10.4 | 3.66 | 22.8 | 99.0 | 58.0 | 34.8 | 60.0 | 54.1 | 122 | 23 | 69 | 46 | 86 |
| Comparative Example 3 | l | 120 | 400 | | 42.2 | 0 | 35 | 10.4 | 3.66 | 22.8 | 98.4 | 58.0 | 35.7 | 61.6 | 55.9 | 110 | 24 | 72 | 48 | 83 |
| Comparative Example 4 | m | 64 | 400 | | 98.4 | 0 | 95 | 10.4 | 3.66 | 22.8 | 98.5 | 61.2 | 47.9 | 78.3 | 60.4 | 93 | 26 | 76 | 50 | 84 |
| Comparative Example 5 | n | 120 | 400 | | 21.1 | 54.7 | 30 | 10.4 | 3.66 | 22.8 | 98.3 | 56.7 | 32.8 | 57.8 | 49.3 | 134 | 21 | 64 | 43 | 81 |
| Comparative Example 6 | o | 120 | 400 | | 42.2 | 0 | 96 | 1.3 | 0.31 | 5.7 | 98.4 | 23.1 | 14.5 | 62.7 | 1329.9 | 87 | 19 | 47 | 28 | 43 |

It is apparent from Table 1 that when the ratio of the content $z_2$ of the average sequence of the constituent unit $z$ to the content $z_1$ of the constituent unit $z$ was 50.0 mol% or less (Examples 1 to 9), the difference in elution ratio of the water-absorbent copolymer into water before and after irradiation with ultraviolet rays (elution ratio 2 - elution ratio 1) was small, and therefore the water-absorbent copolymer had high light resistance. When the total amount of unreacted monomers contained in the water-absorbent copolymer was 1,000 ppm or less (Examples 1 to 9), the budding ratio was high, and the plant was well grown.

On the other hand, when the ratio of the content $z_2$ of the average sequence of the constituent unit $z$ to the content $z_1$ of the constituent unit $z$ was more than 50.0 mol% (Comparative Examples 1 to 5), the water-absorbent copolymer had low light resistance. When the total amount of unreacted monomers contained in the water-absorbent copolymer was more than 1,000 ppm (Comparative Example 6), the budding ratio was low, and the plant was not well grown.

INDUSTRIAL APPLICABILITY

The water-absorbent copolymer of the present invention itself is excellent in light resistance, and therefore can be used in applications in which light resistance is required (e.g. agricultural or horticultural water retention materials, aromatic gelling agents, deodorant gelling agents, artificial snow and the like). In addition, even under the condition of being exposed to light, the water-absorbent copolymer can maintain its properties (absorption amount of water, water absorption rate, gel strength and the like) for a long period of time.

**Claims**

1. A water-absorbent copolymer comprising a vinyl alcohol constituent unit x and a constituent unit z other than the vinyl alcohol constituent unit x and a vinyl ester constituent unit y, wherein a ratio of a content of an average sequence of the constituent unit z to a content of the constituent unit z is 50.0 mol% or less.

2. The water-absorbent copolymer according to claim 1, wherein the content of the constituent unit z is 50.0 mol% or less based on the total number of moles of all the constituent units forming the water-absorbent copolymer.

3. The water-absorbent copolymer according to claim 1 or 2, wherein the constituent unit z has an ionic group or a derivative of an ionic group.

4. The water-absorbent copolymer according to claim 3, wherein the constituent unit z has a derivative of an ionic group.

5. The water-absorbent copolymer according to any one of claims 1 to 4, wherein the constituent unit z is derived from one or more types of monomers selected from the group consisting of acrylic acid, methacrylic acid, maleic acid, itaconic acid and derivatives thereof.

6. The water-absorbent copolymer according to any one of claims 1 to 5, wherein the water-absorbent copolymer has a crosslinked structure.

7. The water-absorbent copolymer according to claim 6, wherein the water-absorbent copolymer is not crosslinked at the constituent unit z moiety.

8. The water-absorbent copolymer according to any one of claims 1 to 7, wherein the total amount of unreacted monomers contained in the water-absorbent copolymer is 1,000 ppm or less.

9. The water-absorbent copolymer according to any one of claims 1 to 8, which is used for agriculture.

10. The water-absorbent copolymer according to claim 9, which is used for raising of seedling.

11. A method for producing the water-absorbent copolymer according to any one of claims 1 to 10, comprising the step of adding monomers for forming the constituent unit z to monomers for forming the constituent units x and y in a divided manner or continuous manner to copolymerize the monomers.

12. The method according to claim 11, wherein in a copolymerization reaction system in the step, a molar ratio of the monomers forming the constituent unit z to the monomers forming the constituent units x and y is 0.1 or less.

## INTERNATIONAL SEARCH REPORT

| International application No. |
|---|
| PCT/JP2020/024619 |

### A. CLASSIFICATION OF SUBJECT MATTER
C08F 218/04(2006.01)i; C08F 222/02(2006.01)i; C08F 222/04(2006.01)i
FI: C08F218/04; C08F222/04; C08F222/02

According to International Patent Classification (IPC) or to both national classification and IPC

### B. FIELDS SEARCHED

Minimum documentation searched (classification system followed by classification symbols)
C08F218/04; C08F222/02; C08F222/04

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 52-14689 A (SUMITOMO CHEMICAL INDUSTRY COMPANY LIMITED) 03.02.1977 (1977-02-03) claims, page 2, upper right column, paragraphs [0001], [0002], lower right column, paragraph [0001], page 3, upper left column, paragraph [0001] to lower left column, paragraph [0001], page 4, upper left column, paragraph [0002], examples | 1-12 |
| Y | JP 2-79911 A (SANYO CHEMICAL INDUSTRIES, LTD.) 20.03.1990 (1990-03-20) claims, page 2, upper right column, paragraph [0001] to lower left column, paragraph [0003], page 3, upper right column, paragraph [0001] | 1-12 |
| Y | JP 7-268165 A (SHOWA HIGHPOLYMER CO., LTD.) 17.10.1995 (1995-10-17) claims, paragraph [0004] | 1-12 |
| Y | JP 62-270606 A (KOBE STEEL, LTD.) 25.11.1987 (1987-11-25) claims, page 2, upper right column, paragraphs [0002], [0003] | 1-12 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 August 2020 (31.08.2020) | 08 September 2020 (08.09.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/024619 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-308940 A (NIPPON SHOKUBAI CO., LTD.) 23.10.2002 (2002-10-23) claims, paragraphs [0002], [0007], [0010] | 1-12 |
| Y | JP 56-8619 A (SUMITOMO CHEMICAL INDUSTRY COMPANY LIMITED) 29.01.1981 (1981-01-29) claims | 10 |
| A | JP 1-101379 A (HITACHI CHEMICAL INDUSTRY CO., LTD.) 19.04.1989 (1989-04-19) | 1-12 |

Form PCT/ISA/210 (continuation of second sheet) (January 2015)

**INTERNATIONAL SEARCH REPORT**
Information on patent family members

International application No.

PCT/JP2020/024619

| Patent Documents referred in the Report | Publication Date | Patent Family | Publication Date |
|---|---|---|---|
| JP 52-14689 A | 03 Feb. 1977 | (Family: none) | |
| JP 2-79911 A | 20 Mar. 1990 | (Family: none) | |
| JP 7-268165 A | 17 Oct. 1995 | (Family: none) | |
| JP 62-270606 A | 25 Nov. 1987 | (Family: none) | |
| JP 2002-308940 A | 23 Oct. 2002 | (Family: none) | |
| JP 56-8619 A | 29 Jan. 1981 | (Family: none) | |
| JP 1-101379 A | 19 Apr. 1989 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1998005196 A
- JP 2013544929 A
- JP 2135263 A
- WO 2009072232 A
- JP 2009185117 A